# FASCICULE DE BREVET EUROPEEN

(11) **EP 1 554 134 B1**
(45) Date de publication et mention de la délivrance du brevet: **22.08.2007**
(21) Numéro de dépôt: 03769376.9
(22) Date de dépôt: 13.10.2003
(51) Int. Cl.: B60C 15/06, B60C 15/024

(54) **PROTECTION DE BOURRELET DE PNEUMATIQUE**
REIFENWULSTSCHUTZ
TYRE BEAD PROTECTION

(30) Priorité: 16.10.2002 FR 0212892
(43) Date de publication de la demande: 20.07.2005
(73) Titulaire: Société de Technologie Michelin, 63000 Clermont-Ferrand Cedex 09 (FR); Michelin Recherche et Technique S.A., 1763 Granges-Paccot (CH)
(72) Inventeur: EYNARD, Claude, F-11440 Peyriac de Mer (FR); FAURE, Jean-Claude-John, 63200 Mozac (FR); IMBERT, Bertrand, I-12010 Santa Croce di Cervasca (IT); PEYROT, André, F-63100 Clermont-Ferrand (FR)
(74) Mandataire: Diernaz, Christian
(86) Numéro de dépôt international: PCT/EP2003/011301
(87) Numéro de publication internationale: WO 2004/035328

(56) Documents cités:
- WO-A-99/64258
- WO-A-02/068220
- FR-A- 2 804 906

## Description

La présente invention concerne un pneumatique à armature de carcasse radiale destiné à être monté sur une jante dont au moins un siège est incliné vers l'extérieur et est prolongé axialement à l'extérieur par une saillie de faible hauteur. Elle concerne plus particulièrement les bourrelets d'un tel pneumatique.

Un bourrelet destiné à être monté sur une jante dont au moins un siège est incliné vers l'extérieur est décrit par exemple dans la publication internationale WO 95/23073. Le bourrelet décrit dans cette publication, comprend une paroi extérieure dont la portion axialement à l'extérieur est axialement en retrait par rapport à la saillie de faible hauteur de la jante. En conséquence, cette partie de jante axialement la plus à l'extérieur ne bénéficie d'aucune protection par le pneumatique contre les agressions causées, par exemple, par le frottement contre les trottoirs au cours d'un roulage en ville. L'architecture, c'est-à-dire la structure, de ce type de bourrelet de pneumatique est décrite dans la publication internationale WO 95/23073 et comprend en particulier une partie formant un "talon" prévu pour être situé axialement à l'intérieur et une pointe de bourrelet prévue pour être située axialement à l'extérieur lorsque le pneumatique est monté sur sa jante de montage.

Ce pneumatique comprend en outre une armature de carcasse dont les extrémités sont ancrées dans chaque bourrelet à un dispositif d'ancrage, ledit dispositif d'ancrage étant formé d'au moins un élément de renforcement circonférentiel de bourrelet (comme une tringle ou un ensemble de fils ou câbles enroulés circonférentiellement) et d'un coin en mélange de caoutchouc de dureté élevée et de forme sensiblement triangulaire. Ce coin est, vu en coupe dans un plan méridien (c'est-à-dire contenant l'axe de rotation du pneumatique), limité par une face latérale radialement extérieure et une face radialement intérieure et enfin une face reliant les deux faces précédentes et située axialement à l'extérieur, de façon que le sommet du coin opposé à ladite face latérale soit situé radialement vers l'intérieur de l'élément de renforcement circonférentiel de bourrelet. L'armature de carcasse est ancrée à chacune de ses extrémités sur ledit dispositif d'ancrage au moyen d'un retournement qui s'enroule, au moins partiellement, autour de l'élément de renforcement circonférentiel de bourrelet et se prolonge dans ou autour du coin en mélange de caoutchouc de dureté élevée.

Le fait de vouloir assurer une protection satisfaisante de la jante contre les chocs et frottements divers a conduit à adapter la forme axialement extérieure du bourrelet, adaptation consistant à prévoir un volume supplémentaire de mélange de caoutchouc de manière à ce que ce volume supplémentaire empêche le contact de la saillie axialement extérieure de la jante avec tout objet extérieur.

Si ce volume supplémentaire, formant une protubérance sur chaque bourrelet se montant sur un siège de jante incliné vers l'extérieur, protège effectivement la saillie correspondante de la jante, il est bien sûr susceptible d'être soumis à un phénomène d'abrasion lorsque le pneumatique frotte contre un objet extérieur, notamment un trottoir. La demande internationale WO 99/64258 publiée le 16/12/1999 enseigne de pourvoir cette protubérance avec une pluralité d'incisions de largeur non nulle et de profondeur au plus égale à 5 mm, ces incisions délimitant une pluralité de nervures parallèles entre elles et espacées régulièrement dans la direction circonférentielle.

Cette dernière construction si elle favorable en ce qui concerne l'aspect abrasion, n'en présente pas moins encore quelques inconvénients que la présente invention cherche à résoudre. En effet, il a été constaté que dans des conditions extrêmes il pouvait se produire des arrachements de matière localisés sur une plus ou moins grande épaisseur. Dans certains cas, l'épaisseur est telle que le coin du dispositif d'ancrage est mis à nu et éventuellement les renforts de l'armature de carcasse le sont aussi. Les renforts de la carcasse ne sont alors plus protégés des agents externes (eau, air, ..).

Le document FR-A-2 804 906 montre un pneumatique comprenant les caractéristiques du préambule de la revendication 1. L'invention a pour but de proposer une solution permettant d'éviter la mise à nu des renforts de carcasse tout en maintenant une protection de la jante par le pneumatique lui même. ,

Le pneumatique, selon l'invention, comprend :
- deux bourrelets dont au moins un bourrelet a un siège de bourrelet incliné vers l'extérieur, c'est-à-dire tel que par rapport à l'axe de rotation du pneumatique les points dudit siège axialement les plus à l'intérieur du pneumatique sont plus éloignés de l'axe de rotation que les points du même siège axialement les plus à l'extérieur du pneumatique, ce bourrelet comprenant un dispositif d'ancrage formé d'au moins un élément de renforcement circonférentiel de bourrelet et d'un coin en matériau caoutchoutique (A) de rigidité élevée (c'est-à-dire ayant un module à 10% de déformation au moins égal à 25 MPa) et de forme sensiblement triangulaire délimité par une face radialement à l'extérieur, une face radialement à l'intérieur et une face latérale axialement à l'extérieur reliant les deux précédentes faces et le sommet à l'opposé de la face axialement à l'extérieur du coin étant situé radialement sous l'élément de renforcement circonférentiel de bourrelet,
- une armature de carcasse radiale constituée d'un matériau caoutchoutique (B) renforcé d'une pluralité de renforts (fils, câbles) faisant, dans le pneumatique, un angle égal ou proche de 90° avec la direction circonférentielle, cette armature de carcasse étant ancrée dans chaque bourrelet présentant un siège incliné vers l'extérieur à un dispositif d'ancrage en passant radialement à l'intérieur de l'élément de renforcement circonférentiel de bourrelet et en allant de l'intérieur vers l'extérieur du pneumatique pour former un retournement s'étendant sur ou dans le coin en mélange de caoutchouc,
- et axialement à l'extérieur de la face latérale du coin, une protubérance en matériau caoutchoutique (C) formant la portion axialement la plus à l'extérieur de chaque bourrelet présentant un siège incliné vers l'extérieur, le matériau (C) employé étant choisi pour être résistant à l'abrasion et à des chocs afin de protéger axialement la jante lorsque le pneumatique est monté sur sa jante.

Ce pneumatique est en outre caractérisé en ce que chaque bourrelet, ayant un siège incliné vers l'extérieur, comprend, entre la protubérance axialement à l'extérieur dudit bourrelet et la face latérale du coin axialement à l'extérieur, un profilé de protection de bourrelet d'épaisseur au moins égale à 0.3 mm en matériau caoutchoutique (D) de module à 10% de déformation supérieur au module du matériau constituant ladite protubérance, le module à 10% de déformation du matériau formant ladite-protubérance étant compris entre 8 et 20 MPa.

Le profilé de protection de bourrelet peut se présenter sous la forme d'une couche de caoutchouc d'épaisseur uniforme et au moins égale à 0.3 mm dont l'une des faces externes est préférentiellement en contact avec la face axialement à l'intérieur de la protubérance en matériau (C). Grâce aux caractéristiques énoncées, lorsque se produit un choc violent provoquant une cassure et un arrachement d'une partie de la protubérance axialement externe, le décollement de ladite partie se fait sur la face axialement externe du profilé de protection de bourrelet qui reste en place et protège alors le coin et l'armature de carcasse.

Pour conserver une épaisseur plus importante audit profilé de protection bourrelet; il est possible de lui donner toute forme appropriée (par exemple une surépaisseur locale).

La combinaison de la présence d'un profilé de protection en matériau caoutchoutique radialement à l'extérieur du coin et de l'armature de carcasse et du choix des propriétés physiques de ce matériau comparativement à celles des matériaux caoutchoutiques de la protubérance et du coin et de l'armature de carcasse conduit à une protection suffisante de ladite armature puisque l'on a constaté que cette structure permettait une meilleure tenue du bourrelet (et de la protubérance) à l'arrachement et une meilleure protection de la carcasse même à la suite d'un arrachement localisé (on constate que la surface de rupture est située sur la surface la plus à l'extérieur du profilé de protection).

Ce profilé de protection peut en outre recouvrir au moins en partie une des faces radialement intérieure ou extérieure du coin. Dans le cas où le retournement de l'armature de carcasse est situé sur l'une au moins des faces du coin, le profilé de protection recouvre le retournement.

Avantageusement, le profilé de protection recouvre la face radialement extérieure du coin et se prolonge entre ledit coin et les éléments de renforcement circonférentiels du bourrelet pour s'étendre jusqu'à une distance plus ou moins importante axialement à l'intérieur desdits éléments.

Dans le cas où les éléments de renforcement circonférentiels du bourrelet forment une tringle, on peut placer un mélange de caoutchouc servant d'interface entre la tringle et les renforts de l'armature de carcasse. Préférentiellement, ce mélange de caoutchouc a un module à 10% de déformation qui est au moins égal au module du mélange de la protubérance. De manière avantageuse, le profilé de protection de bourrelet peut être prolongé sur la face externe du coin pour passer entre la tringle et l'armature de carcasse.

Pour accroître encore la protection, il est possible d'incorporer au matériau composant le profilé de protection des renforts sous forme de fibres ou de fils ou de câbles, métalliques ou textiles ou encore de tissus des mêmes éléments pris seuls ou en combinaison.

Les caractéristiques de l'invention seront mieux comprises à l'aide des dessins, annexés à la description qui suit, illustrant à titre non limitatif des exemples de réalisation d'un pneumatique conforme à l'invention. Ces dessins comprennent :
- Figure 1 vue en coupe méridienne d'une première variante de réalisation comprenant un profilé de protection de bourrelet d'épaisseur non uniforme ;
- Figure 2 : vue en coupe méridienne d'une deuxième variante de réalisation selon laquelle le profilé de protection de bourrelet est prolongé sur le retournement de carcasse sous et le long de la tringle ;
- Figure 3 : vue en coupe méridienne d'une troisième variante de réalisation selon laquelle le retournement de l'armature de carcasse est prolongé radialement à l'extérieur du coin du dispositif d'ancrage.

Par commodité, les mêmes signes de référence sont employés pour les figures montrant des variantes distinctes dès lors qu'ils désignent des éléments identiques au moins dans leur fonction.

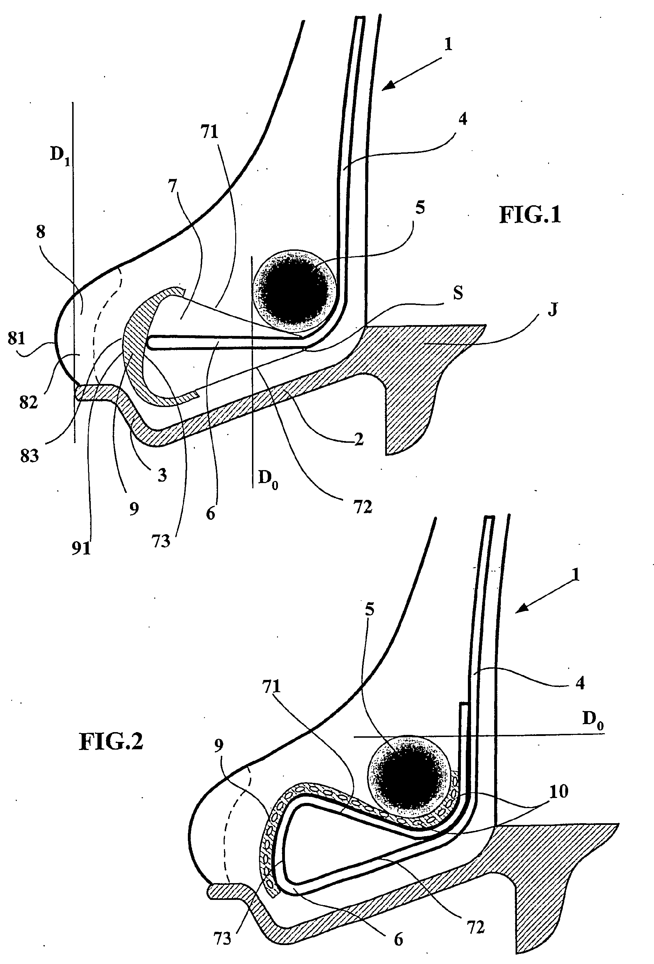

Sur la figure 1 on voit une coupe dans un plan méridien (c'est-à-dire contenant l'axe de rotation du pneumatique) d'un bourrelet 1 d'un pneumatique selon une première variante de l'invention. Dans cette variante, on voit un siège 2 de jante J incliné vers l'extérieur (c'est-à-dire dont les points axialement les plus à l'extérieur sont sur un cercle de diamètre inférieur au cercle sur lesquels se trouvent les points axialement les plus à l'intérieur) prolongé axialement à l'extérieur par une saillie 3 ou "hump" de faible hauteur. Sur ce siège 2 est monté un bourrelet 1 d'un pneumatique comprenant une armature de carcasse 4 enroulée autour d'une tringle 5 de bourrelet pour former un retournement 6. Cette armature de carcasse 4 est formée d'un mélange de caoutchouc préférentiellement de faible perte afin de réduire la résistance au roulement du pneumatique et de renforts sous forme de fils ou câbles disposés de manière radiale dans le pneumatique (c'est-à-dire selon un angle égal ou proche de 90° avec la direction circonférentielle) ; dans le cas présent, le module à 10% de déformation du mélange de caoutchouc de l'armature de carcasse 4 est sensiblement égal à 3.4 MPa.

Ce retournement 6 s'étend axialement à l'intérieur d'un coin de caoutchouc 7 ayant une face supérieure 71 et une face inférieure 72, lesdites deux faces étant réunies par une face latérale 73 située axialement à l'extérieur (c'est-à-dire du côté de la saillie 3 de jante J). Le sommet S opposé à la face latérale 73 du coin de caoutchouc 7 est localisé radialement à l'intérieur de la tringle 5 et axialement à l'intérieur d'une droite D₀ perpendiculaire à l'axe de rotation et tangente axialement à l'extérieur de ladite tringle 5, de façon à créer une coopération entre ledit coin 7 et ladite tringle 5 pour constituer un dispositif d'ancrage de l'armature de carcasse 4.

La tringle 5 peut être une tringle de type tressé, c'est-à-dire une tringle formée d'une âme autour de laquelle sont enroulés un(des) fil(s) ou câble(s) sur une ou plusieurs couches. De façon équivalente, la tringle peut être remplacée par une pluralité de câbles enroulés circonférentiellement et disposés d'un même côté ou bien de part et d'autre de l'armature de carcasse comme cela est décrit, par exemple, dans la demande WO01/39999.

Dans cette première variante selon l'invention, le retournement de la carcasse divise le coin de caoutchouc 7 sensiblement en deux parties égales pour se terminer sur ou au voisinage de la face latérale 73 dudit coin.

Axialement à l'extérieur du bourrelet 1 et venant en appui sur la saillie 3 de jante J, le bourrelet 1 comprend une partie 8 formant protubérance en mélange de caoutchouc ayant un module égal à 15 MPa. Outre le fait que cette protubérance 8 dépasse axialement vers l'extérieur la saillie de la jante (c'est-à-dire axialement au delà d'une droite D₁ perpendiculaire à l'axe de rotation et tangente axialement à l'extérieur de la saillie 3) pour protéger cette dernière des chocs et frottements éventuels, ladite protubérance 8 comprend sur sa face 81, visible de l'extérieur, une pluralité de nervures 82 parallèles les unes aux autres et orientées sensiblement dans la direction méridienne.

Sur la face latérale 73 du coin de caoutchouc 7 et axialement à l'intérieur de la face interne 83 de la protubérance 8, est disposé un profilé de protection de bourrelet 9 en mélange de caoutchouc ayant un module à 10% de déformation supérieur au module à 10% de déformation du matériau constituant la protubérance 8 et encore plus préférentiellement supérieur à 25 MPa; dans le cas présent, le module à 10% de déformation du profilé de protection de bourrelet 9 est égal à 44 MPa.

Avantageusement, ce profilé de protection de bourrelet 9 enveloppe le coin de caoutchouc 7 sur toute sa face latérale 73 et partiellement sur la face supérieure 71 et sur la face inférieure 72 dudit coin 7. Il présente sur les faces supérieure et inférieure une épaisseur sensiblement constante et une surépaisseur sur la face latérale 73 du coin de manière à augmenter encore la protection du coin 7 et du retournement 6.

Ce profilé de protection de bourrelet 9 permet de localiser la zone de séparation entre la protubérance 8 et le reste du bourrelet 4 lors d'un choc avec un objet extérieur ; de cette manière, il est possible d'éviter que l'armature de carcasse ou son retournement ne soit apparent.

Sur la figure 2, une autre variante d'un bourrelet 1 de pneumatique selon l'invention est dessinée selon laquelle le retournement 6 de l'armature de carcasse 4, au lieu de passer à l'intérieur du coin de caoutchouc 7 du dispositif d'ancrage, passe radialement à l'intérieur dudit coin 7 en longeant sa face interne 72 puis le long de la face latérale 73 dudit coin avant de longer la face externe 71 du coin pour repasser radialement sous la tringle 5 et terminer à radialement à l'extérieur d'une droite D0 parallèle à l'axe de rotation du pneumatique et passant par le point de la tringle 5 radialement le plus à l'extérieur.

Dans cette variante, il est prévu les mêmes composants que ceux décrits avec la première variante (figure 1) à la différence près que le profilé de protection de bourrelet 9 d'épaisseur sensiblement uniforme recouvre le retournement 6 dans sa partie longeant la face latérale 73 du coin 7 et dans sa partie longeant la face externe 71 dudit coin. De manière avantageuse, ce profilé 9 est prolongé entre la tringle 5 et le retournement de carcasse 10. Également de manière avantageuse, ce profilé 9 peut être renforcé par une pluralité de renforts 10 sous la forme de câbles ou fils (inclinés ou non) ou d'au moins un tissu.

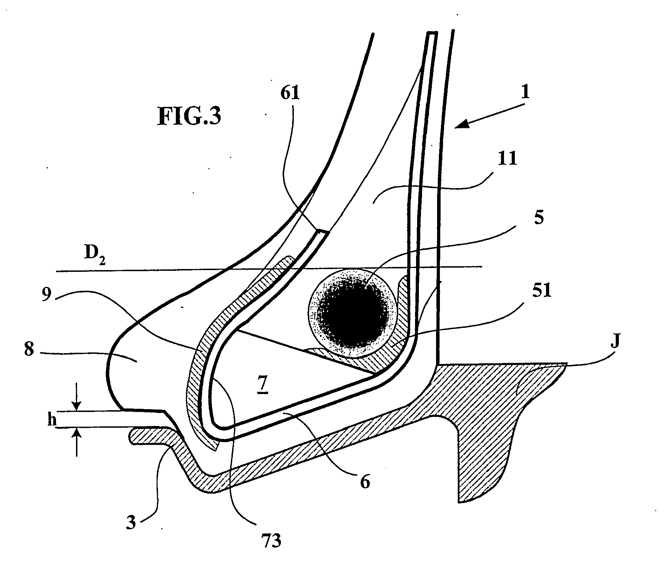

Enfin, dans la troisième variante montrée avec la figure 3, le retournement de carcasse 6 ne repasse plus sous là tringle 5 mais est prolongé radialement au delà de la face latérale du coin 7 le long d'un profilé de caoutchouc 11 disposé axialement et radialement à l'extérieur de la tringle 5.

Dans cet exemple, le module à 10% de déformation du profilé de caoutchouc 11 enveloppant la tringle 5 est égal 25 MPa et les modules des autres mélanges de caoutchouc sont inchangés par rapport à ceux déjà énoncés pour les précédentes variantes (figures 1 et 2).

Pour limiter l'effet de coincement de la protubérance 8 entre un obstacle éventuel et la saillie 3 de jante J lors d'un choc, ladite protubérance 8 est radialement décalée d'une distance h par rapport à ladite saillie 3 de manière à n'être plus en contact avec celle-ci.

Axialement à l'extérieur du retournement de carcasse, il est disposé un profilé de protection de bourrelet 9 d'épaisseur sensiblement uniforme ; ce profilé suit le retournement 6 sur toute la face latérale 73 du coin 7 et en allant au moins jusqu'à un niveau correspondant à la partie radialement la plus à l'extérieur de la tringle 5 (ce niveau est visualisé sur la figure 3 par une droite D₂ parallèle à l'axe de rotation du pneumatique). Ce même profilé de protection pourrait également être prolongé radialement au delà de l'extrémité 61 du retournement 6.

Avantageusement, une épaisseur de caoutchouc 51 de même nature que le profilé de protection de bourrelet est disposée entre la tringle 5 et l'armature de carcasse 4 pour réduire les risques de contact entre lesdites tringle et armature.

L'invention n'est pas limitée aux exemples décrits et représentés et diverses modifications peuvent y être apportées sans sortir de son cadre. En particulier, les dispositions d'une variante décrite avec le support d'une figure peuvent être aisément combinées en totalité ou en partie avec celles d'une autre variante selon le besoin. De même, cette invention est applicable à un pneumatique qu'il y ait un seul ou bien deux bourrelets se montant sur un siège de jante incliné vers l'extérieur.

## Revendications

1. - Pneumatique comprenant :
- deux bourrelets (1) destinés à être en contact avec une jante de montage (J), un au moins desdits bourrelets (1) ayant un siège de bourrelet incliné vers l'extérieur, ce bourrelet (1) comprenant un dispositif d'ancrage formé d'au moins un élément de renforcement circonférentiel de bourrelet (5) et d'un coin (7) en matériau caoutchoutique de dureté élevée (module à 10% de déformation au moins égal à 25 MPa) et de forme sensiblement triangulaire délimité par une face supérieure (71) radialement à l'extérieur, une face inférieure (72) radialement à l'intérieur et une face latérale (73) axialement à l'extérieur reliant les deux précédentes faces, ce coin (7) ayant un sommet (S), à l'opposé de la face latérale (73), situé radialement à l'intérieur de l'élément de renforcement circonférentiel de bourrelet (5),
- une armature de carcasse radiale (4) constituée d'un matériau caoutchoutique renforcé par une pluralité de renforts faisant, dans le pneumatique, un angle égal ou proche de 90° avec la direction circonférentielle, cette armature de carcasse (4) étant ancrée dans chaque bourrelet (1) présentant un siège incliné vers l'extérieur à un dispositif d'ancrage en passant radialement à l'intérieur de l'élément de renforcement circonférentiel de bourrelet (5) et en allant de l'intérieur vers l'extérieur du pneumatique pour former un retournement (6) s'étendant sur ou dans le coin en mélange de caoutchouc (7),
- et axialement à l'extérieur de la face latérale (73) du coin (7), une protubérance (8) en matériau caoutchoutique formant la portion axialement la plus à l'extérieur de chaque bourrelet (1) présentant un siège incliné vers l'extérieur, cette protubérance (8) étant prévue pour protéger axialement la jante (J) contre l'abrasion et les chocs lorsque le pneumatique est monté sur sa jante de montage,
et **caractérisé en ce que** chaque bourrelet (1), ayant un siège incliné vers l'extérieur, comprend, entre la protubérance (8) axialement à l'extérieur dudit bourrelet et la face latérale (73 du coin (7), un profilé de protection de bourrelet (9) d'épaisseur au moins égale à 0.3 mm en matériau caoutchoutique dont le module à 10% de déformation est supérieur au module du matériau constituant ladite protubérance (8) et **en ce que** le module à 10% de déformation du matériau formant la protubérance (8) est compris entre 8 et 20 MPa..

2. - Pneumatique selon la revendication 1 **caractérisé en ce que** le matériau caoutchoutique du profilé de protection de bourrelet (9) a un module à 10% de déformation supérieur à 25 MPa.

3. - Pneumatique selon l'une des revendications 1 ou 2 **caractérisé en ce que** le retournement (6) de l'armature de carcasse (4) est en contact, au moins partiel, avec l'une des faces inférieure (72) ou supérieure (71) du coin (7) du dispositif d'ancrage et **en ce que** le profilé de protection de bourrelet (9) recouvre, outre la face latérale (73) dudit coin, ledit retournement (6).

4. - Pneumatique selon l'une des revendications 1 à 3 **caractérisé en ce que** les éléments circonférentiels de renforcement de bourrelet (5) constituent une tringle.

5. - Pneumatique selon la revendication 4 **caractérisé en ce qu'**entre la tringle (5) et l'armature de carcasse (4) est placé un profilé en matériau caoutchoutique (51), le module du matériau de ce profilé (51) étant identique à celui du profilé de protection de bourrelet (9).

6. - Pneumatique selon la revendication 5 **caractérisé en ce que** le profilé de protection de bourrelet (9) est prolongé de manière à passer entre la tringle de bourrelet (5) et l'armature de carcasse (4).

7. - Pneumatique selon l'une des revendications 1 à 6 **caractérisé en ce que** le profilé de protection de bourrelet (9) est renforcé par des fibres, fils, câbles (10) ou au moins un tissu.

8. - Pneumatique selon l'une des revendications 1 à 7 **caractérisé en ce que** la protubérance (8) formant la portion axialement la plus à l'extérieur de chaque bourrelet (1) présentant un siège incliné vers l'extérieur est radialement décalée vers l'extérieur de la saillie (3) axialement à l'extérieur de la jante d'une distance h.

## Claims

1. Tyre comprising:
- two beads (1) intended to be in contact with a mounting rim (J), at least one of the said beads (1) having a bead seat inclined towards the outside, this bead (1) comprising an anchoring device formed by at least one circumferential bead reinforcement element (5) and a wedge (7) made from rubber mix with a high hardness (modulus at 10% deformation at least equal to 25 MPa) and with a substantially triangular shape delimited by a top face (71) radially to the outside, a bottom face (72) radially to the inside and a lateral face (73) axially to the outside connecting the previous two faces, this wedge (7) having a vertex (S), opposite to the lateral face (73), situated radially to the inside of the circumferential bead reinforcement element (5),
- a radial carcass reinforcement (4) formed from a rubber mix reinforced by a plurality of reinforcements forming, in the tyre, an angle equal to or close to 90° to the circumferential direction, this carcass reinforcement (4) being anchored in each bead (1) having a seat inclined towards the outside to an anchoring device, passing radially inside the circumferential bead reinforcement element (5) and going from the inside to the outside of the tyre in order to form an upturn (6) extending over or in the wedge made from rubber mix (7),
- and axially to the outside of the lateral face (73) of the wedge (7), a protuberance (8) made from rubber mix forming the portion axially furthest towards the outside of each bead (1) having a seat inclined towards the outside, this protuberance (8) being provided for axially protecting the rim (J) against abrasion and impacts when the tyre is mounted on its mounting rim,
and **characterised in that** each bead (1), having a seat inclined towards the outside, comprises, between the protuberance (8) axially towards the outside of the said bead and the lateral face (73) of the wedge (7), a bead protection profile (9) with a thickness at least equal to 0.3 mm made from rubber mix whose modulus at 10% deformation is greater than the modulus of the material constituting the said protuberance (8) and **in that** the modulus at 10% deformation of the material forming the protuberance (8) is between 8 and 20 MPa.

2. Tyre according to Claim 1, **characterised in that** the rubber mix of the rim protection profile (9) has a modulus at 10% deformation greater than 25 MPa.

3. Tyre according to one of Claims 1 or 2, **characterised in that** the upturn (6) of the carcass reinforcement (4) is in at least partial contact with one of the bottom (72) or top (71) faces of the wedge (7) of the anchoring device and **in that** the rim protection profile (9) covers, apart from the lateral face (73) of the said wedge, the said upturn (6).

4. Tyre according to one of Claims 1 to 3, **characterised in that** the circumferential rim reinforcement elements (5) constitute a bead wire.

5. Tyre according to Claim 4, **characterised in that**, between the bead wire (5) and the carcass reinforcement (4), there is placed a profile made from rubber mix (51), the modulus of the material of this profile (5) being identical to that of the bead protection profile (9).

6. Tyre according to Claim 5, **characterised in that** the bead protection profile (9) is extended so as to pass between the bead wire (5) and the carcass reinforcement (4).

7. Tyre according to one of Claims 1 to 6, **characterised in that** the bead protection profile (9) is reinforced by fibres, wires, cables (10) or at least one canvas.

8. Tyre according to one of Claims 1 to 7, **characterised in that** the protuberance (8) forming the axially outermost portion of each bead (1) having a seat inclined towards the outside is radially offset towards the outside of the projection (3) axially outside the rim by a distance h.

## Patentansprüche

1. Reifen, umfassend:
- zwei Wülste (1), die dazu bestimmt sind, mit einer Montagefelge (J) in Kontakt zu sein, wobei mindestens einer dieser Wülste (1) einen nach außen geneigten Wulstsitz aufweist, dieser Wulst (1) eine Verankerungsvorrichtung umfasst, geformt aus mindestens einem Wulstumfangsverstärkungselement (5) und einem Keil (7) aus Gummimaterial mit hoher Härte (Modul bei 10 % Verformung mindestens gleich 25 MPa) und im Wesentlichen dreieckiger Form, die radial außen durch eine Oberseite (71), radial innen durch eine Unterseite (72) und axial außen durch eine Seitenfläche (73) begrenzt wird, die die zwei vorgenannten Flächen verbindet, wobei dieser Keil (7) entgegengesetzt zur Seitenfläche (73) einen Scheitel (S) aufweist, der radial innen vom Wulstumfangsverstärkungselement (5) angeordnet ist,
- eine radiale Karkasseneinlage (4), bestehend aus einem Gummimaterial, das durch eine Vielzahl von Verstärkungen verstärkt ist, die im Reifen einen Winkel von etwa 90° zur Umfangsrichtung bilden, wobei diese Karkasseneinlage (4) in jedem Wulst (1) mit einem nach außen geneigten Sitz an einer Verankerungsvorrichtung verankert ist, indem sie radial innen vom Wulstumfangsverstärkungselement (5) verläuft und im Reifen von innen nach außen geht, um eine Umbiegung (6) zu formen, die sich auf oder im Keil (7) aus einer Gummimischung erstreckt,
- und, axial außen von der Seitenfläche (73) des Keils (7), eine Ausbeulung (8) aus Gummimaterial, die den axial äußersten Abschnitt jedes Wulstes (1) mit einem nach außen geneigten Sitz formt, wobei diese Ausbeulung (8) vorgesehen ist, um die Felge (J) axial vor Abrieb und Stößen zu schützen, wenn der Reifen auf seiner Montagefelge montiert ist,
und **dadurch gekennzeichnet, dass** jeder Wulst (1) mit einem nach außen geneigten Sitz zwischen der axial äußersten Ausbeulung (8) dieses Wulstes und der Seitenfläche (73) des Keils (7) ein Wulstschutzprofil (9) mit einer Dicke von mindestens 0,3 mm aus einem Gummimaterial aufweist, dessen Modul bei 10 % Verformung größer ist als das Modul des Materials, aus dem die Ausbeulung (8) besteht, und **dadurch**, dass das Modul bei 10 % Verformung des Materials, aus dem die Ausbeulung (8) geformt ist, zwischen 8 und 20 MPa beträgt.

2. Reifen nach Anspruch 1, **dadurch gekennzeichnet, dass** das Gummimaterial des Wulstschutzprofils (9) ein Modul bei 10 % Verformung größer als 25 MPa aufweist.

3. Reifen nach einem der Ansprüche 1 oder 2, **dadurch gekennzeichnet, dass** die Umbiegung (6) der Karkasseneinlage (4) mindestens teilweise mit einem von der der Unterseite (72) oder der Oberseite (71) des Keils (7) der Verankerungsvorrichtung in Kontakt ist, und dass das Wulstschutzprofil (9) außer der Seitenfläche (73) dieses Keils diese Umbiegung (6) bedeckt.

4. Reifen nach einem der Ansprüche 1 bis 3, **dadurch gekennzeichnet, dass** die Wulstumfangsverstärkungselemente (5) ein Drahtseil bilden.

5. Reifen nach Anspruch 4, **dadurch gekennzeichnet, dass** zwischen der Drahtseileinlage (5) und der Karkasseneinlage (4) ein Profil aus Gummimaterial (51) angeordnet ist, wobei das Modul des Materials dieses Profils (51) dem des Wulstschutzprofils (9) entspricht.

6. Reifen nach Anspruch 5, **dadurch gekennzeichnet, dass** das Wulstschutzprofil (9) auf solche Weise verlängert ist, dass es zwischen dem Wulstdrahtseil (5) und der Karkasseneinlage (4) geführt ist.

7. Reifen nach einem der Ansprüche 1 bis 6, **dadurch gekennzeichnet, dass** das Wulstschutzprofil (9) durch Fasern, Drähte, Seile (10) oder mindestens ein Gewebe verstärkt ist.

8. Reifen nach einem der Ansprüche 1 bis 7, **dadurch gekennzeichnet, dass** die Ausbeulung (8), die den axial äußersten Abschnitt jedes Wulstes (1) mit einem nach außen geneigten Sitz formt, vom axial äußeren Buckel (3) der Felge um eine Entfernung h radial nach außen versetzt ist.
